(19) Europäisches Patentamt / European Patent Office / Office européen des brevets

(11) **EP 4 245 251 A1**

(12) **EUROPEAN PATENT APPLICATION**
published in accordance with Art. 153(4) EPC

(43) Date of publication:
**20.09.2023 Bulletin 2023/38**

(51) International Patent Classification (IPC):
***A61C 8/00*** (2006.01)

(21) Application number: **21890420.9**

(22) Date of filing: **01.11.2021**

(86) International application number:
**PCT/BR2021/050479**

(87) International publication number:
**WO 2022/099393 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.11.2020 BR 102020022937**

(71) Applicant: **JJGC Indústria E Comércio
De Materiais Dentários S.A.
81270-200 Curitiba - PR (BR)**

(72) Inventors:
 • **THOMÉ, Geninho**
   **80420-170 Curitiba - PR (BR)**
 • **DE QUEIROZ, Tiago Nunes**
   **83602-410 Curitiba - PR (BR)**
 • **MERTIN, Felix Andreas**
   **82540-140 Curitiba - PR (BR)**
 • **BERNARDES, Sérgio Rocha**
   **81220-110 Curitiba - PR (BR)**
 • **LUCCA, Ilderaldo José**
   **82400-000 Curitiba (BR)**

(74) Representative: **Elzaburu S.L.P.
Edificio Torre de Cristal
Paseo de la Castellana 259 C, planta 28
28046 Madrid (ES)**

(54) **SYSTEM OF DENTAL COMPONENTS AND IMPLANTS WITH GEOMETRIC CONFIGURATIONS THAT ALLOW ONLY MATCHING PARTS TO BE ASSEMBLED TOGETHER**

(57) This invention belongs to the field of dentistry, more precisely implantology, and refers to dental components and implants system, components and prosthetic instruments for installing single or multiple prostheses, whose interfaces only enable the coupling and fixation between implants and its corresponding components, i.e., they have a geometry that prevents the fixation between non-corresponding parts. Said system comprises interfaces with geometric features that only allow perfect couplings between implant (10, 100) and prosthetic component (20, 120), said geometric features being defined by the fact that a pre-bore of the female thread (14) of the regular implant (10) has a diameter slightly larger than the outer diameter of the thread (122) of the prosthetic component (120), and by the following equation involving the implant (100) and the prosthetic component (20): when $D_{111}=D_{21}$, we have $L_{111}>L_{22}$ (1).

FIG. 4

## Description

This invention belongs to the field of dentistry, more precisely implantology, and refers to a system of implants, components and prosthetic instruments for installing single or multiple prostheses, whose interfaces only enable the coupling and fixation between implants and its corresponding components, i.e., they have a geometry that prevents the fixation between non-corresponding parts, thus avoiding the occurrence of installation errors that may cause serious future inconvenience to the patient.

## Description of prior art

As is known by those skilled in the art, the process of installing dental prostheses implanted in patients with single or multiple edentulous regions requires the perforation of an alveolus where an implant previously selected by the implantologist will be threaded, wherein the selection of the most appropriate implant for the case depends on several factors such as, for example, the bone width and height available at the installation location.

Once the implant is installed, it will be necessary to attach a prosthetic component to it, which will act as a basis for the effective installation of the dental prosthesis. To this end, the implant has an internal cavity that configures the component's coupling interface, which generally presents a female thread in the apical or lower portion for fixing the screw that aims to keep the prosthetic component properly attached to the implant. In the median and cervical (or upper) portions of the internal cavity of the implant, the walls are shaped in variable geometries, designed to promote the perfect seating of the prosthetic component and, consequently, the proper sealing between the parts - which aims to prevent food waste and/or bacteria from entering and causing cause swelling, pain, bleeding or inflammation in the region and, thus, inflict serious inconvenient to the patient. Typically, it has an anti-rotational geometry in the central region of the coupling interface, and a cervical geometry that can be conical, vertical, or present several other configurations.

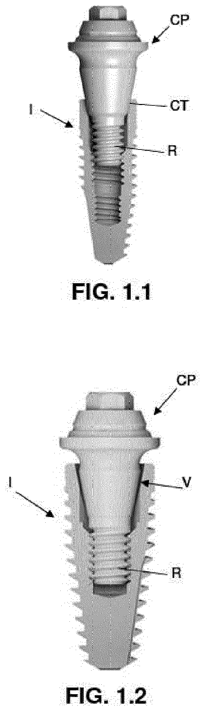

Due to the existence of several types and dimensions of implants, there are also several types of prosthetic components (CP), each intended for use with a specific implant model to promote perfect coupling and sealing between the pieces. Although the manufacturers indicate which implants are suitable for use with each component, there are situations where incompatible components can be fixed - inappropriately, it should be noted - to non-corresponding implants, thus promoting installation that, although appearing to be sturdy, has deficiencies: inadequate fixation as it has a small area of thread (R) installed, despite having contact (CT) between the parts, or the permanence of gaps (V) between the component (CP) and the implant (I), even with the entire thread (R) installed - as can be seen in the examples presented in Figures 1.1 and 1.2. In this case, the parts fit together and the implant receives torque from the threaded region - which, alternatively, could be a screw - albeit only for a few thread pitches; however due to this poor fixation, the constant forces to which the system is subjected during mastication may end up loosening the screw and causing the component's thread to fracture. This is a serious problem that can lead to loss of the component and require removal of the part of the fractured thread, so that at least the implant can possibly be saved.

Document WO2011/071228 is an example of a prior art that aims to increase the interface threaded portion contact area between the implant and the prosthetic component, considering that the best coupling and sealing conditions occur when the thread contact area is greater than the contact area between the smooth surfaces of the prosthetic component and the cervical region of the implant interface. Subject matter of document JP2005270334 also aims to improve the couplement between the implant and the prosthetic component, aiming to improve the fixation and sealing conditions between the parts. However, both solutions only show good results when said prosthetic components are installed in the corresponding implants.

Therefore, it is observed that the current state of the art has already sought solutions to improve the sealing between implants and prosthetic components that belong to the same line, i.e., that have corresponding parts with which they must be used. However, there are no known solutions to the lack of proper use conditions when coupling (merely by mistaken choice or for any other reason) non-corresponding parts that, nevertheless, seem to fit together properly, especially if they can be torqued during the installation of the fastening screw. In other words, the current technique provided no means to prevent an apparent proper coupling between non-corresponding parts as a way of providing greater safety, efficacy and service life to the components used to install dental implants.

## Objectives of the invention

Therefore, the invention aims to provide a mounting geometry that only allows the correct prosthetic components to be attached to the implant.

Therefore, it is an object of the invention to provide a system of dental components and implants having an interface geometry that only allows assembly between corresponding parts.

Thus, it is another among the main objects of the invention to provide a system of dental components and implants of preferably narrow and regular conformation, in which it is not possible to couple prosthetic components of the narrow line in regular implants and vice versa.

Accordingly, it is one of the objectives of the invention to disclose a dental components and implants system that only allows coupling between corresponding parts, to promote the best possible fastening and sealing conditions for the installation.

**Summary of the invention**

This invention, therefore, refers to a dental components and implants system containing geometric configurations that only allow assembly between corresponding parts, said system comprising: at least one implant (10, 100) including substantially conical geometry (11, 111) with at least one region of diameter ($D_{111}$) in its cervical portion, anti-rotational geometry (12, 112) in its intermediate portion and at least one female thread (14, 114, 115) with diameter ($D_{14}$, $D_{114}$, $D_{115}$) and length ($L_{14}$, $L_{114}$, $L_{115}$) in its middle and apical portion, wherein the length ($L_{111}$) represents the distance between the region of diameter ($D_{111}$) and the start of the female thread (114); and at least one prosthetic component (20, 120) cooperating with said implant (10, 100), said prosthetic component (20, 120) comprising an interface region (21, 121) of diameter ($D_{21}$) and substantially conical geometry that cooperates with the substantially conical geometry (11, 111) of the implant (10, 100), and at least one male thread (22, 122) of diameter ($D_{22}$, $D_{122}$) and length ($L_{22}$, $L_{122}$) that cooperates with at least one female thread (14, 114, 115) of the implant (10, 100), characterized in that said system comprises interfaces with geometric features that only allow perfect couplings between implant (10, 100) and prosthetic component (20, 120), said geometric features being defined by the fact that a pre-bore of the female thread (14) of the regular implant (10) has a diameter slightly larger than the outer diameter of the thread (122) of the prosthetic component (120) and by the following equation involving the implant (100) and the prosthetic component (20): when $D_{111}=D_{21}$, we have $L_{111}>L_{22}$ (1).

Preferably, the system may further comprise geometric features defined by the following equations:

$$L_{22} >= L_{14}/2 \text{ (equation 2);}$$

$$D_{114}>D_{115} \text{ (equation 3),}$$

and

$$L_{122}>=L_{115} \text{ (equation 4).}$$

The system may comprise implants with regular prosthetic interfaces (10) and implants with narrow prosthetic interfaces (100) and include prosthetic components with regular interfaces (20) and prosthetic components with narrow interfaces (120).

Ideally, the regular interface prosthetic components (20) only cooperate with regular prosthetic interface implants (10), wherein the male thread (22) of the prosthetic component (20) only cooperates with the female thread (14) of the regular interface implant (10). The narrow interface prosthetic components (120) only cooperate with narrow interface prosthetic implants (100), wherein the male thread (122) of the narrow interface prosthetic component (120) only cooperates with the female thread (115) of the narrow interface implant (100). Furthermore, preferably the narrow interface prosthetic component (120) comprises a lower abutment with smooth cylindrical intermediate region (123) of length $L_{123}$.

**Brief description of the drawings**

This invention will be described in more detail below based on a preferred example embodiment represented in the appended figures, which show.

Figs. 1.1 and 1.2 show longitudinal cross-sectional views of two assemblies of prosthetic components that fit and present torque on implants, but in fact are assemblies of non-corresponding components that can cause problems both to the parts and the patient.
Fig. 2 shows a partial cross-sectional view of a regular implant according to one of the preferred embodiments of the system of this invention.
Fig. 3 shows a prosthetic component that can be installed in the implant depicted in Fig. 2.
Fig. 4 shows a partial longitudinal cross-sectional view of the couplement of the prosthetic component of Fig. 3 in the implant of Fig. 2.
Fig. 5 shows a partial cross-sectional view of an attempt to assembly the prosthetic component of Fig. 3 into a non-corresponding / unsuitable implant.
Fig. 6 shows a partial cross-sectional view of a narrow implant according to another preferred embodiment of the system of this invention.
Fig. 7 shows a prosthetic component that can be installed in the narrow implant depicted in Fig. 6.
Fig. 8 shows a partial longitudinal cross-sectional view of to the couplement of the prosthetic component of Fig. 7 in the implant of Fig. 6.
Fig. 9 shows a partial cross-sectional view of an attempt to assembly the prosthetic component of Fig. 7 into a non-corresponding / unsuitable implant.
Fig. 10 shows, individually, just the interface region of any regular prosthetic component that can be installed in a regular implant of the system disclosed in the invention.
Fig. 11 shows, individually, just the interface region of any narrow prosthetic component that can be installed in a narrow implant of the system disclosed in the invention.
Fig. 12 shows a cross-sectional view of a regular implant interface.
Fig. 13 shows a cross-sectional view of a narrow implant interface.

Fig. 14 shows an example of a healing cap having the regular interface geometric configuration for coupling to a regular implant according to a preferred embodiment of this invention.

Fig. 15 shows an example of a healing cap having the narrow interface geometric configuration for coupling to a narrow implant according to a preferred embodiment of this invention.

Fig. 16 shows an example of a "Novaloc Attachment" type component presenting the regular interface geometric configuration for coupling to a regular implant according to a preferred embodiment of this invention.

Fig. 17 shows an example of an "Equator Attachment" component having the narrow interface geometric configuration for coupling to a narrow implant according to a preferred embodiment of this invention.

**Detailed description of the invention**

The object of this invention will be described and explained in more detail based on the accompanying drawings, which have a merely exemplary and non-limiting nature, since adaptations and modifications can be made without thereby changing the scope of the claimed protection.

In a preferred embodiment, the dental components and implants system of this invention basically includes a set of implants and prosthetic components having a conical interface defined by specific geometries that do not allow inappropriate prosthetic components (i.e., those that are not the ones indicated for use with that particular implant) to couple and/or torque when positioned on incompatible implants. Such a condition is obtained through a specific combination of the following features: (i) type of prosthetic interface: narrow and regular; (ii) linear and angular dimensions of the interface cervical region, (iii) thread type and (iv) thread diameter.

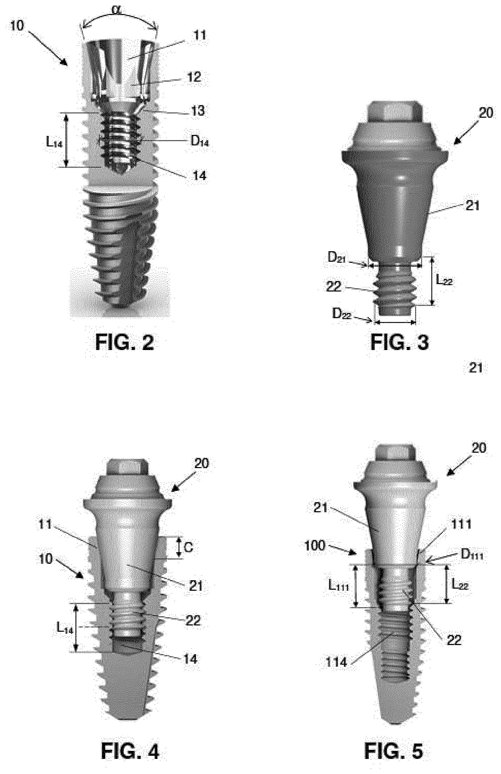

In Fig. 2 a regular interface implant 10 is depicted, which is defined by conical geometry 11 in its cervical portion, anti-rotational geometry 12 and transition chamfer 13 in its intermediate portion, and female thread 14 of constant diameter in the middle and apical portions of implant 10 (in the preferred embodiment presented herein, the female thread is configured to receive a M2.0 x 0.40 screw). An example of prosthetic component 20 corresponding to the implant 10 is shown in Fig. 3, in which it is possible to observe that the interface region 21 presents conical geometry, tapered in an angulation identical to that of the angle $\alpha$ of the conical geometry 11 of implant 10. In addition, the prosthetic component 20 has a M2.0 x 0.40 thread type 22 with length of $L_{22}$. A condition that should be observed in this case is that for a good attachment of the prosthetic component 20 to the regular implant 10, we recommend that the threaded portion of the length $L_{22}$ be fixed / in contact with at least

half the length $L_{14}$ of the regular implant female thread 14.

With such geometry, the coupling of a regular prosthetic component 20 with a regular implant 10 is perfect as shown in Fig. 4, which means that: (i) there is seating with good contact area C between the component 20 and the implant 10; (ii) the entire threaded portion of the length $L_{22}$ of the male thread 22 of the prosthetic component 20 is in contact with the female thread 14 of the implant 10; in addition, (iii) the length $L_{22}$ is greater than or equal to half the length of the female thread $L_{14}$, and (iv) the contact that promotes the cervical sealing of the assembly only occurs when component 20 is completely threaded, which provides a rigid, sealed and safe installation, capable of preventing the penetration of substances at the implant internal interface and, consequently, greatly minimizing the risk of the emergence of bacteria and inflammation.

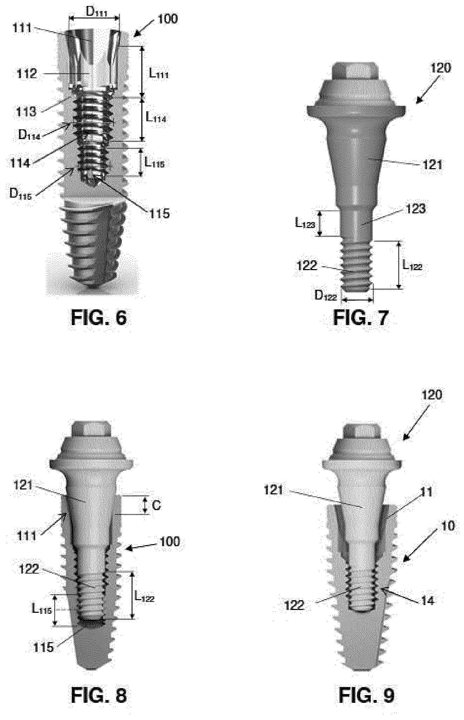

In Figs. 6 and 7 you can see, respectively, an implant with narrow prosthetic interface 100, and a corresponding prosthetic component 120, i.e., both presenting specific geometries to allow perfect coupling and fixation to each other. As shown in Fig. 6, the narrow implant 100 also presents conical geometry 111 in its cervical portion, anti-rotational geometry 112 and transition chamfer 113 in its intermediate portion, and middle and apical region with double female thread, wherein the diameter of the most apical female thread 115 (which, in the exemplary preferred embodiment presented herein is type M1.6 x 0.35) is smaller than the diameter of the most cervical female thread 114 (preferably type M2.0 x 0.40). The prosthetic component 120 shown in Fig. 7 also closely resembles the regular prosthetic component 20, mainly in its upper portion due to its conical geometry interface region 121. However, the lower abutment has a smooth cylindrical intermediate region 123 of length $L_{123}$ and male thread 122 (in the example, it is type M1.6 x 0.35) of length $L_{122}$ only at its apical end, since the prosthetic component male thread 122 only cooperates with the most apical female thread 115 of implant 100. It should be noted that the length $L_{122}$ of the male thread 122 should be greater than or equal to the length $L_{115}$ of the most apical female thread 115 of the narrow implant 100. Thus, it is understood that the total female thread length $L_{114} + L_{115}$ of the narrow implant 100 must be equal to the total length of the cylindrical region and male thread $L_{123} + L_{122}$ of the narrow prosthetic component 120. Such geometry causes adequate contact C between the component interface 121 and the conical geometry 111 of the implant 100 only when the component male thread 122 is in contact with at least half of the narrow implant extension $L_{115}$, to promote proper fixation.

With such conformation, the coupling and attachment between the narrow implant 100 and the narrow prosthetic component 120 is made as illustrated in the section shown in Fig. 8: (i) there is seating with good contact area C between the component 120 and the implant 100; (ii) the prosthetic component male thread 122 is in contact with more than 50% of the length $L_{115}$ of the

implant female thread 115, which provides a rigid, sealed and safe installation for the patient.

Figs. 5 and 9 demonstrate how the geometric configuration of the system of this invention prevents incompatible prosthetic components from being improperly installed in non-corresponding implants. Fig. 5 shows what happens when a regular prosthetic component 20 is mistakenly installed on a narrow implant 100: when the region of diameter $D_{21}$ of interface 21 comes into contact with the conical geometry 111 of the narrow implant 100 (a contact that prevents the component from going deeper inside the implant 100) the component male thread 22 (type M2.0 x 0.40) has not even reached the start of the female thread 114 (also type M2.0 x 0.40), so that there is no torque in this installation and, consequently, the implantologist can immediately notice that the selected component is not suitable to be fixed to the implant already installed in the patient's dental arch. It should be noted that for this condition to be met, it is necessary that (i) at the point where the diameter $D_{111}$ of the implant conical geometry 11 has the same measurement as the diameter $D_{21}$ of the component 20, it is necessary for the distance $L_{111}$ to be at least slightly greater than the length $L_{22}$ of the thread 22 of the prosthetic component 20, and that (ii) the diameter $D_{22}$ of the thread 22 be smaller than the diameter $D_{114}$ of the narrow implant apical thread 114. There is a limitation of diameter $D_{22}$ and length $L_{22}$ in the prosthetic component thread 22 to prevent the occurrence of torque as already mentioned, since a thread of greater diameter and length would possibly present torque when contacting the narrow implant upper female thread 114, which this invention aims to avoid.

On the other hand, in Fig. 9 it is observed that if a narrow prosthetic component 120 is introduced into a regular implant 10, no contact occurs since (i) the regular implant 10 has conical geometry 11 of much larger diameter than that of the 120 and (ii) the pre-bore of the regular implant female thread 14 has a diameter slightly larger than the outer diameter of the prosthetic component thread 122. In one of the preferred embodiments of the invention, the female thread 14 of the regular implant 10 is M2.0 x 0.40 (but with a pre-bore diameter conformed in a slightly larger dimension than conventional) while the male thread 122 of the narrow component 120 is M1.6 x 0.35; thus there is no chance of contact likely to lead the professional to think that torque has occurred in the improper coupling between these two parts and, therefore, it is easy to see that the chosen component is not suitable for the implant already installed.

Therefore, both the interface of the implants 10, 100 and their corresponding prosthetic components 20, 120 must have geometric configurations obeying the specific conditions indicated below:
When

$$D_{111}=D_{21}, \; L_{111}>L_{22} \quad (1)$$

$$L_{22} >= L_{14}/2 \quad (2)$$

$$D_{114}>D_{115} \quad (3)$$

$$L_{122}>=L_{115} \quad (4)$$

$$L_{114} + L_{115} = L_{123} + L_{122} \quad (5)$$

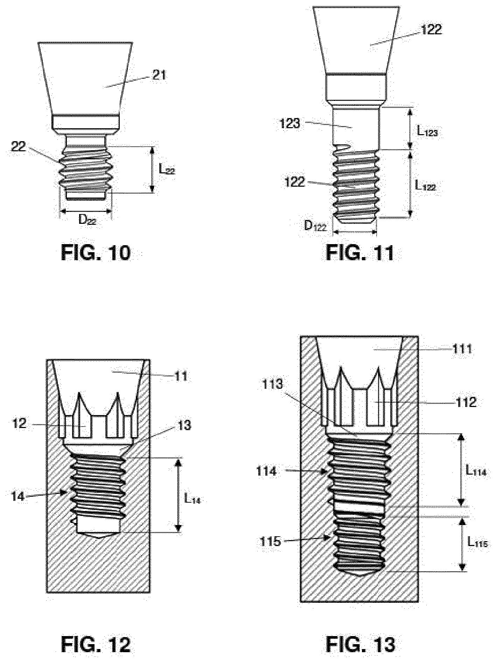

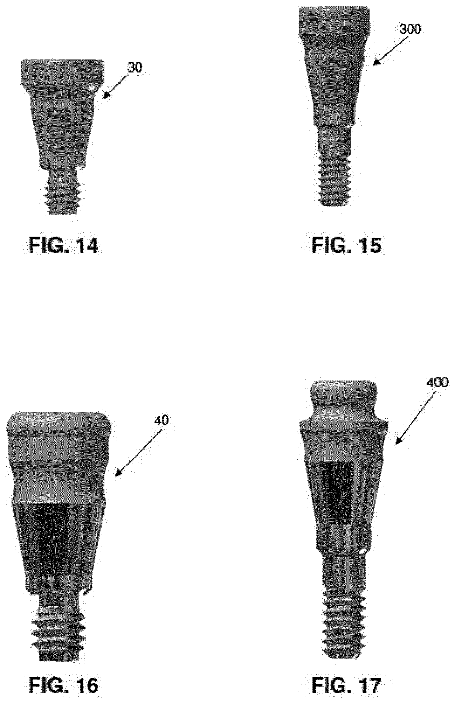

Figs. 10 and 11 show, separately and respectively, the interface elements of the regular and narrow prosthetic components, and such elements may have any upper portion to configure the most varied components that are generally used in implantology, such as, for example, the healing caps 30 and 300 illustrated in Figs. 14 and 15, or the attachments 40, 400 of Figs. 16 and 17. All of them have a lower region with common geometries in order to only fit in the corresponding implants and, thus, eliminate the possibilities of improper installation. It should be clarified that the invention is not restricted to the exemplary shapes and dimensions presented herein and other dimensional and functional compositions - especially regarding prosthetic components - can be used with the conditions described herein, without thereby departing from the scope of protection presented herein.

## Claims

1. A dental components and implants system containing geometric configurations that only allow assembly between corresponding parts, said system comprising:

   - at least one implant (10, 100) comprising substantially conical geometry (11, 111) with at least one region of diameter ($D_{111}$) in its cervical portion, anti-rotational geometry (12, 112) in its intermediate portion, and at least one female thread (14, 114, 115) with diameter ($D_{14}$, $D_{114}$, $D_{115}$) and length ($L_{14}$, $L_{114}$, $L_{115}$) in its middle and apical portion, wherein the length ($L_{111}$) is the distance between the region of diameter ($D_{111}$) and the start of the female thread (114), and

   - at least one prosthetic component (20, 120) cooperating with said implant (10, 100), said prosthetic component (20, 120) comprising an interface region (21, 121) of diameter ($D_{21}$) and substantially conical geometry that cooperates with the substantially conical geometry (11, 111) of the implant (10, 100), and at least one male thread (22, 122) of diameter ($D_{22}$, $D_{122}$) and length ($L_{22}$, $L_{122}$) that cooperates with at least one female thread (14, 114, 115) of the implant (10, 100),

**characterized in that** said system comprises interfaces with geometric features that only allow perfect couplings between implant (10, 100) and prosthetic component (20, 120), said geometric features being defined by the fact that a pre-bore of the female thread (14) of the regular implant (10) has a diameter slightly larger than the outer diameter of the thread (122) of the prosthetic component (120), and by the following equation involving the implant (100) and the prosthetic component (20): when $D_{111}=D_{21}$, we have $L_{111}>L_{22}$ (1).

2. The system of claim 1, **characterized in that** it also comprises geometric features defined by the following equations:

$$L_{22} >= L_{14}/2 \text{ (equation 2)};$$

$$D_{114}>D_{115} \text{ (equation 3)},$$

and

$$L_{122}>=L_{115} \text{ (equation 4)}.$$

3. The system of claim 1, **characterized in that** it comprises implants with regular prosthetic interfaces (10) and implants with narrow prosthetic interfaces (100).

4. The system of claim 1, **characterized in that** it comprises prosthetic components with regular interfaces (20) and prosthetic components with narrow interfaces (120).

5. System according to any one of claims 1 to 4, **characterized in that** the regular interface prosthetic components (20) only cooperate with regular prosthetic interface implants (10), wherein the male thread (22) of the prosthetic component (20) only cooperates with the female thread (14) of the regular interface implant (10).

6. The system according to any one of claims 1 to 4, **characterized in that** the narrow interface prosthetic components (120) only cooperate with narrow interface prosthetic implants (100), wherein the male thread (122) of the narrow interface prosthetic component (120) only cooperates with the female thread (115) of the narrow interface implant (100).

7. System according to any one of claims 1, 4 or 6, **characterized in that** the narrow interface prosthetic component (120) comprises a lower abutment with smooth cylindrical intermediate region (123) of length ($L_{123}$).

## Amended claims under Art. 19.1 PCT

1. A dental components and implants system containing geometric configurations that only allow assembly between corresponding parts, said system comprising:

- at least one implant (10, 100) comprising substantially conical geometry (11, 111) with at least one region of diameter ($D_{111}$) in its cervical portion, anti-rotational geometry (12, 112) in its intermediate portion, and at least one female thread (14, 114, 115) with diameter ($D_{14}$, $D_{114}$, $D_{115}$) and length ($L_{14}$, $L_{114}$, $L_{115}$) in its middle and apical portion, wherein the length ($L_{111}$) is the distance between the region of diameter ($D_{111}$) and the start of the female thread (114), and

- at least one prosthetic component (20, 120) cooperating with said implant (10, 100), said prosthetic component (20, 120) comprising an interface region (21, 121) of diameter ($D_{21}$) and substantially conical geometry that cooperates with the substantially conical geometry (11, 111) of the implant (10, 100), and at least one male thread (22, 122) of diameter ($D_{22}$, $D_{122}$) and length ($L_{22}$, $L_{122}$) that cooperates with at least one female thread (14, 114, 115) of the implant (10, 100),

**characterized in that** said system comprises interfaces with geometric features that only allow perfect couplings between implant (10, 100) and prosthetic component (20, 120), said geometric features being defined by the fact that a pre-bore of the female thread (14) of the regular implant (10) has a diameter slightly larger than the outer diameter of the thread (122) of the prosthetic component (120), and by the following equation involving the implant (100) and the prosthetic component (20): - when

$$D_{111}=D_{21}, \text{ we have } L_{111}>L_{22} \text{ (1)},$$

$$L_{22} >= L_{14}/2 \text{ (equation 2)};$$

$$D_{114}>D_{115} \text{ (equation 3)},$$

and

$$L_{122} >= L_{115} \text{ (equation 4).}$$

2. The system of claim 1, **characterized in that** it comprises implants with regular prosthetic interfaces (10) and implants with narrow prosthetic interfaces (100).

3. The system of claim 1, **characterized in that** it comprises prosthetic components with regular interfaces (20) and prosthetic components with narrow interfaces (120).

4. System according to any one of claims 1 to 3, **characterized in that** the regular interface prosthetic components (20) only cooperate with regular prosthetic interface implants (10), wherein the male thread (22) of the prosthetic component (20) only cooperates with the female thread (14) of the regular interface implant (10).

5. The system according to any one of claims 1 to 3, **characterized in that** the narrow interface prosthetic components (120) only cooperate with narrow interface prosthetic implants (100), wherein the male thread (122) of the narrow interface prosthetic component (120) only cooperates with the female thread (115) of the narrow interface implant (100).

6. System according to any one of claims 1, 3 or 5, **characterized in that** the narrow interface prosthetic component (120) comprises a lower abutment with smooth cylindrical intermediate region (123) of length ($L_{123}$).

**Statement under Art. 19.1 PCT**

In order to make clearer the scope of protection intended with the patent application in question, the applicant has made changes and presents attached a new claim set containing 6 claims, in which:

- claim 2 as originally filed has been incorporated into new claim 1, and
- the remaining claims have been duly renumbered.

It should be noted that the entire content of the claims originally filed has been maintained, but only rearranged, so that the basis for amendments is found in the specification and the claims themselves when the application was filed with the International Authority.

FIG. 1.1

FIG. 1.2

**FIG. 2**

**FIG. 3**

**FIG. 4**

**FIG. 5**

FIG. 6

FIG. 7

FIG. 8

FIG. 9

**FIG. 10**

**FIG. 11**

**FIG. 12**

**FIG. 13**

FIG. 14

FIG. 15

FIG. 16

FIG. 17

## INTERNATIONAL SEARCH REPORT

| International application No. |
|---|
| **PCT/BR2021/050479** |

**A. CLASSIFICATION OF SUBJECT MATTER**
**(IPC) A61C8/00 (2006.01)**
**(CPC) A61C8/005**
According to International Patent Classification (IPC) or to both national classification and IPC

**B. FIELDS SEARCHED**

Minimum documentation searched (classification system followed by classification symbols)

**A61C**

Documentation searched other than minimum documentation to the extent that such documents are included in the fields searched

**BANCO DE PATENTES DO INPI-BR**

Electronic data base consulted during the international search (name of data base and, where practicable, search terms used)

**ESPACENET, DERWENT WORLD PATENTS INDEX (DWPI)**

**C. DOCUMENTS CONSIDERED TO BE RELEVANT**

| Category* | Citation of document, with indication, where appropriate, of the relevant passages | Relevant to claim No. |
|---|---|---|
| Y | BR MU9000334 U2 (DIAS SIDIVAL [BR]) (2011-08-30) (Claims 1 & 2, Figures 1 to 17, Pages 4 to 10) ------------------------------------------------ | 1, 2, 3, 4, 5, 6, 7 |
| Y | DE 102019001715 A1 (SPINDLER BRUNO [DE]) (2020-09-17) (Claims 1 & 9, Figures 1 to 16, Pages 4 to 15) ------------------------------------------------ | 1, 2, 3, 4, 5, 6, 7 |
| Y | US 5035619 A (DAFTARY FEREIDOUN [US]) (1991-07-30) (Claims 1 & 14, Figures 1 to 13, Pages 3 to 9) ------------------------------------------------ | 1, 2, 3, 4, 5, 6 |
| Y | DE 20303653 U1 (DENTAMECHANIK SVO BUDWEIS [CZ]) (2004-04-01) (Claims 1 & 3, 5 & 6; Figure 1, Column 3 to 4) ------------------------------------------------ | 1, 2, 3, 4, 5, 6 |

| [X] Further documents are listed in the continuation of Box C. | [X] See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17/01/2022 | 27/01/2022 |

| Name and mailing address of the **ISA/BR** | Authorized officer |
|---|---|
| INSTITUTO NACIONAL DA PROPRIEDADE INDUSTRIAL Rua Mayrink Veiga n° 9, 6° andar cep: 20090-910, Centro - Rio de Janeiro/RJ Facsimile No. | **Guilherme Moreira Marques** Telephone No. +55 21 3037-3493/3742 |

Form PCT/ISA/210 (second sheet) (January 2015)

**INTERNATIONAL SEARCH REPORT**

International application No.

**PCT/BR2021/050479**

C (Continuation).     DOCUMENTS CONSIDERED TO BE RELEVANT

| Category* | Citation of document, with indication, where appropriate, of the relevant passages | Relevant to claim No. |
|---|---|---|
| Y | US 9248007 B2 ( DENTSPLY INT INC [US]) (2016-02-02) (Claim 1; Figure 4a to 5c, 7a to 9b, Column 12 to 15 ) | 1, 2, 3, 4, 5 |
| Y | US 10813723 B2 (MIS IMPLANTS TECH LTD [IL]) (2020-10-27) (Claims 1 to 16; Figures 1 to 3B, 4B to 402, 5A, Columns 8 to 17) | 1,2 |
| Y | US 6663388 B1 (STRAUMANN INST AG [CH]) (2003-12-16) (Claims 1 to 16; Figures 1 to 3B, 4B to 402, 5A, Columns 8 to 9) | 1 |
| Y | US 8951044 B2 ( HITACHI METALS LTD [JP]) (2015-02-10) (Claims 1 to 6; Figures 1, 11(b), 12(a), 16, Columns 7 to 9) | 1 |
| Y | WO 2020141534 A1 (IMPLANT B LTD [IL]) (2020-07-09) (Figures 6A, 6B, 9C, 9F, Pages 17, 2, 29 to 32) | 1 |
| Y | US 10052179 B2 (ZIMMER DENTAL INC [US]) (2018-08-21) (Figures 1 to 2A, 14, 15, Pages 3 to 6) | 1 |
| Y | US 8408904 B2 ( STRAUMANN HOLDING AG [CH]) (2013-04-02) (Figures 1D, 1E, Columns 4 to 6) | 1 |
| Y | WO 2005058178 A2 (SUTTER FRANZ [CH]) (2005-06-30) (Figures 2 to 13, 32, 36 to 40, 46) | 1 |
| Y | WO 2011071228 A1 ( PARK MU YONG [KR]) (2011-06-16) (Figures 1 to 4b, Pages 4 to 6) | 1 |

Form PCT/ISA/210 (continuation of second sheet) (January 2015)

| INTERNATIONAL SEARCH REPORT | International application No. |
|---|---|
| Information on patent family members | PCT/BR2021/050479 |

| Patent document cited in the search report | Publication Date | Patent family member(s) | Publication Date |
|---|---|---|---|
| BR MU9000334 U2 | 2011-08-30 | NONE | |
| DE 102019001715 A1 | 2020-09-17 | WO 2020182243 A1 | 2020-09-17 |
| US 5035619 A | 1991-07-30 | AT 118328 T | 1995-03-15 |
| | | CA 2028078 A1 | 1991-04-21 |
| | | DE 69016916 D1 | 1995-03-23 |
| | | EP 0423798 A1 | 1991-04-24 |
| | | ES 2070239 T3 | 1995-06-01 |
| | | US 5073111 A | 1991-12-17 |
| | | US 5145372 A | 1992-09-08 |
| DE 20303653 U1 | 2004-04-01 | NONE | |
| US 9248007 B2 | 2016-02-02 | US 2012270180 A1 | 2012-10-25 |
| | | AU 2012244734 A1 | 2013-10-17 |
| | | BR 112013026305 A2 | 2021-04-13 |
| | | CA 2832767 A1 | 2012-10-26 |
| | | CN 103501724 A | 2014-01-08 |
| | | EP 2514390 A1 | 2012-10-24 |
| | | JP 2014514107 A | 2014-06-19 |
| | | JP 6410602 B2 | 2018-10-24 |
| | | JP 2017164534 A | 2017-09-21 |
| | | KR 20140021597 A | 2014-02-20 |
| | | KR 101889581 B1 | 2018-08-17 |
| | | RU 2013150800 A | 2015-05-27 |
| | | RU 2596057 C2 | 2016-08-27 |
| | | US 2016113740 A1 | 2016-04-28 |
| | | WO 2012143475 A1 | 2012-10-26 |
| US 10813723 B2 | 2020-10-27 | US 2018338818 A1 | 2018-11-29 |
| | | BR 112019025239 A2 | 2020-06-09 |
| | | CN 110944598 A | 2020-03-31 |
| | | EP 3629997 A1 | 2020-04-08 |
| | | ES 2828087 T3 | 2021-05-25 |
| | | IL 270997 D0 | 2020-01-30 |
| | | KR 20200012951 A | 2020-02-05 |
| | | PL 3629997 T3 | 2021-01-25 |
| | | RU 2019144447 A | 2021-07-02 |
| | | RU 2757708 C2 | 2021-10-20 |
| | | WO 2018220612 A1 | 2018-12-06 |
| US 6663388 B1 | 2003-12-16 | AT 328545 T | 2006-06-15 |
| | | AU 1854300 A | 2000-07-31 |
| | | AU 749684 B2 | 2002-07-04 |
| | | AU 1553599 A | 1999-04-23 |
| | | BR 9915812 A | 2001-10-30 |
| | | CA 2351434 A1 | 2000-07-06 |
| | | DE 59913530 D1 | 2006-07-20 |
| | | EP 1139906 A1 | 2001-10-10 |
| | | ES 2265695 T3 | 2007-02-16 |
| | | HK 1042033 A1 | 2002-08-02 |
| | | JP 2002533155 A | 2002-10-08 |

Form PCT/ISA/210 (patent family annex) (January 2015)

INTERNATIONAL SEARCH REPORT
Information on patent family members

| International application No. |
|---|
| **PCT/BR2021/050479** |

| Patent document cited in the search report | Publication Date | Patent family member(s) | Publication Date |
|---|---|---|---|
| | | JP 3678653 B2 | 2005-08-03 |
| | | WO 0038588 A1 | 2000-07-06 |
| | | WO 9916293 A2 | 1999-04-08 |
| US 8951044 B2 | 2015-02-10 | US 2014141387 A1 | 2014-05-22 |
| | | CN 103561679 A | 2014-02-05 |
| | | DE 112012001947 T5 | 2014-02-13 |
| | | JP WO2012161182 A1 | 2014-07-31 |
| | | JP 5761342 B2 | 2015-08-12 |
| | | KR 20140009523 A | 2014-01-22 |
| | | KR 101519869 B1 | 2015-05-13 |
| | | TW 201302168 A | 2013-01-16 |
| | | TW I555516 B | 2016-11-01 |
| | | WO 2012161182 A1 | 2012-11-29 |
| WO 2020141534 A1 | 2020-07-09 | IL 264114 D0 | 2020-07-30 |
| US 10052179 B2 | 2018-08-21 | US 2016151128 A1 | 2016-06-02 |
| | | CN 103118625 A | 2013-05-22 |
| | | EP 2618773 A1 | 2013-07-31 |
| | | JP 2013540001 A | 2013-10-31 |
| | | JP 6033776 B2 | 2016-11-30 |
| | | US 2014147812 A1 | 2014-05-29 |
| | | US 9259297 B2 | 2016-02-16 |
| | | WO 2012039819 A1 | 2012-03-29 |
| US 8408904 B2 | 2013-04-02 | US 2009123890 A1 | 2009-05-14 |
| | | AU 2006254357 A1 | 2006-12-07 |
| | | CA 2607117 A1 | 2006-12-07 |
| | | CN 101188982 A | 2008-05-28 |
| | | DK 2119414 T3 | 2013-05-27 |
| | | EP 1728486 A1 | 2006-12-06 |
| | | EP 2119414 A1 | 2009-11-18 |
| | | EP 2260788 A2 | 2010-12-15 |
| | | EP 3115018 A1 | 2017-01-11 |
| | | ES 2415737 T3 | 2013-07-26 |
| | | JP 2008541901 A | 2008-11-27 |
| | | JP 4942742 B2 | 2012-05-30 |
| | | JP 2012050889 A | 2012-03-15 |
| | | JP 5475748 B2 | 2014-04-16 |
| | | KR 20080012404 A | 2008-02-11 |
| | | KR 101239565 B1 | 2013-03-05 |
| | | US 2013183637 A1 | 2013-07-18 |
| | | US 8968002 B2 | 2015-03-03 |
| | | US 2015157427 A1 | 2015-06-11 |
| | | WO 2006128620 A2 | 2006-12-07 |
| | | ZA 200711030 B | 2009-07-29 |
| | | ZA 200901872 B | 2010-01-27 |
| WO 2005058178 A2 | 2005-06-30 | WO 2005058178 A3 | 2005-08-25 |
| | | CH 696800 A5 | 2007-12-14 |

Form PCT/ISA/210 (patent family annex) (January 2015)

**REFERENCES CITED IN THE DESCRIPTION**

**Patent documents cited in the description**

- WO 2011071228 A
- JP 2005270334 B